**Europäisches Patentamt**

**European Patent Office**

**Office européen des brevets**

(19)

(11) Veröffentlichungsnummer: **0 048 973**
**B1**

(12) **EUROPÄISCHE PATENTSCHRIFT**

(45) Veröffentlichungstag der Patentschrift:
04.04.84

(21) Anmeldenummer: **81107626.4**

(22) Anmeldetag: **24.09.81**

(51) Int. Cl.³: **B 29 F 3/02,** B 01 D 35/12

(54) **Vorrichtung zum Filtern von unter Druck zugeführten Flüssigkeiten hoher Viskosität, insbesondere Schmelzen aus thermoplastischen Kunststoffen.**

(30) Priorität: **26.09.80 DE 3036400**

(43) Veröffentlichungstag der Anmeldung:
**07.04.82 Patentblatt 82/14**

(45) Bekanntmachung des Hinweises auf die Patenterteilung:
**04.04.84 Patentblatt 84/14**

(84) Benannte Vertragsstaaten:
**BE CH DE FR GB IT LI NL**

(56) Entgegenhaltungen:
**DE - A - 2 802 847**
**DE - A - 2 844 246**
**DE - A - 3 010 687**
**DE - B - 2 049 879**
**DE - C - 2 403 765**
**US - A - 1 625 024**
**US - A - 3 825 121**

(73) Patentinhaber: **Automatik Apparate-Maschinenbau H. Hench GmbH, Ostring 19, D-8754 Grossostheim 2 (DE)**

(72) Erfinder: **Fritsch, Rudolf, Gosslarerstrasse 58, D-7000 Stuttgart 31 (DE)**

(74) Vertreter: **Bardehle, Heinz, Dipl.-Ing., Patent- und Rechtsanwälte Bardehle-Pagenberg-Dost-Altenburg & Partner Postfach 86 06 20, D-8000 München 86 (DE)**

Vorrichtung zum Filtern von unter Druck zugeführten Flüssigkeiten hoher Viskosität,
insbesondere Schmelzen aus thermoplastischen Kunststoffen

Die Erfindung bezieht sich auf eine Vorrichtung zum Filtern von unter Druck zugeführten Flüssigkeiten hoher Viskosität, insbesondere an eine Strangpresse anschließbare Vorrichtung zum Filtern von Schmelzen aus thermoplastischen Kunststoffen, mit mindestens zwei auswechselbaren Filtern, die an der Stirnfläche eines Ventilgehäuses dichtend angebracht sind und denen die Flüssigkeit über einen von der Flüssigkeit gespeisten Ringkanal derart zugeführt wird, daß die Ventilstößel von an Abzweigungen vom Ringkanal liegenden Hubventilen auch im Falle von deren Schließlage aufgrund eines die Ventilstößel umgebenden Freiraumes von der Flüssigkeit umspült bleiben.

Eine derartige Vorrichtung ist aus der DE-B-2 049 879 bekannt. Bei dieser Anordnung werden übliche Hubventile mit gegenüber den Ventiltellern wesentlich dünneren Ventilschäften verwendet, so daß sich in Schließlage eines Ventils automatisch um den dünnen Ventilschaft ein Freiraum ausbildet. Dieser Freiraum weist den gleichen Durchmesser auf, wie der Ventilsitz. In diesen Freiraum mündet rechtwinklig zu seiner Achse der Ringkanal, dessen Durchmesser kleiner ist als der Hub des Hubventils. Dabei ist die rückwärtige Anschlagfläche des Ventiltellers, die dieser in der Öffnungslage berührt, derart konisch ausgebildet, daß sich in der Öffnungslage ein zum Ventilschaft hin sich vergrößernder Ringraum ausbildet. Aufgrund dieser Gestaltung setzt sich vor allem beim Übergang des Hubventils von der Schließlage in die Öffnungslage Flüssigkeit in dem Ringraum ab, der in der Öffnungslage nicht durchspült werden kann. Außerdem ergeben sich im Freiraum unmittelbar hinter der Einmündung des Ringkanals in Hubrichtung des Hubventils Räume, die von der Flüssigkeitsströmung erst nach rechtwinkliger Umlenkung erreicht werden können. Infolgedessen besteht auch in diesen Räumen in gewissem Umfang die Möglichkeit, daß Bereiche davon außerhalb intensiver Flüssigkeitsströmung liegen. Diese Effekte können in unerwünschter Weise dazu führen, daß im Falle der Verarbeitung von Flüssigkeiten, die gegenüber höheren Temperaturverweilzeiten empfindlich sind, Schädigungen der betreffenden Flüssigkeitsteile eintreten, die dann die zu verarbeitende Flüssigkeit immer wieder verunreinigen.

Der Erfindung liegt die Aufgabe zugrunde, in der eingangs beschriebenen Vorrichtung die Hubventile so zu gestalten, daß mit Sicherheit sowohl in der Schließlage als auch in der Öffnungslage eine Umspülung des Ventilstößels bzw. Durchspülung des Freiraumes erfolgt, die jeweils die gesamte Flüssigkeitsmenge umfaßt, so daß keine Bereiche existieren, in denen Flüssigkeitsteile festgehalten werden bzw. sich stauen können.

Gelöst wird das Problem dadurch, daß der Schaftdurchmesser jedes Ventilstößels gleich dem größten Durchmesser des Ventilsitzes ist und die Schaftführung, den Schaft dichtend umschließend, bis an den gegenüber dem Ventilsitz erweiterten Freiraum heranreicht, dessen in Hubrichtung gemessene Höhe im wesentlichen gleich dem Durchmesser des Ringkanals ist, wobei der Schaft in Öffnungslage des betreffenden Ventils mit seiner Vorderkante etwa mit der Oberfläche des Freiraums abschließt, und daß der Ventilstößel in Schließlage die Wandung des Ventilgehäuses dichtend bis zur Stirnfläche des Ventilgehäuses durchsetzt.

Aufgrund der Ausbildung des Schaftes des Ventilstößels mit einem Durchmesser, der dem größten Durchmesser des Ventilsitzes gleich ist und der den Schaft dichtend umschließenden Schaftführung verbleibt in der Öffnungslage des Ventils keinerlei nicht durchspülter Raum, da der Ventilstößel stets vollständig die Schaftführung ausfüllt. Da die den Schaft dichtend umschließende Schaftführung bis an den Freiraum heranreicht und der Schaft in der Öffnungslage mit seiner Vorderkante etwa mit der Oberfläche des Freiraums abschließt, ergibt sich weder ein Vorspringen des Schaftes in den Freiraum, noch ein Bereich, der von der Flüssigkeit erreichbar in die Schaftführung hineinreicht, so daß in der Öffnungslage sichergestellt ist, daß keinerlei Flüssigkeitsstau eintreten kann. Der Freiraum ist dabei gegenüber dem Ventilsitz erweitert, d. h. die aus dem Ringkanal in den Freiraum strömende Flüssigkeit zweigt sich an dem hinsichtlich seines Durchmessers dem Ventilsitz entsprechenden Stößel auf und umströmt diesen auf Bahnen, die außerhalb des Durchmessers des Ventilsitzes liegen. Auch insofern unterscheidet sich die Gestaltung des Ventils nach der Erfindung von der Ventilanordnung gemäß der DE-B-2 049 879. Schließlich kann sich in der Schließlage des Ventils im Bereich des Ventilgehäuses keinerlei Flüssigkeit festsetzen, da der Ventilstößel in dieser Lage die Wandung des Ventilgehäuses dichtend bis zur Stirnfläche des Ventilgehäuses durchsetzt. Dies bedeutet, daß bei Anordnung des Ventilsitzes zwischen Stirnfläche des Ventilgehäuses und dazu benachbarter Stirnfläche des Freiraums der Ventilstößel in Bohrungen im Ventilgehäuse eindringt, in die er dichtend paßt, so daß kein Raum offen bleibt, in dem sich Flüssigkeit stauen könnte. Darüber hinaus ergibt sich auch in der Schließlage aufgrund des Abschlusses des Ventilstößels mit der Stirnfläche des Ventilgehäuses praktisch eine glatte Fläche, die bei Ausbau des an das Ventilgehäuse angesetzten Filters zwecks Reinigung bzw. Auswechslung des Filters leicht gereinigt werden kann.

Es ist an sich aus der DE-C-2 403 765 bekannt, im Zusammenhang mit einem reinen Absperrventil ohne Verwendung eines Ringkanals ein Hubventil zu verwenden, dessen Ventilschaft gleich dem größten Durchmesser des Ventilsitzes ist. Da hierbei jedoch bewußt die Strömung bei geschlossenem Ventil gestoppt wird, liegen bei dem bekannten Ventil Verhältnisse vor, die mit denen, die bei Verwendung eines Ringkanals maßgebend sind, nicht verglichen werden können, da der Ringkanal gerade das Abstoppen einer Strömung verhindert. Infolgedessen kann die DE-PS 2 403 765 keinen Hinweis auf die Gesamtgestaltung eines Hubventils in Zusammenhang mit einem Ringkanal liefern.

Es ist darüber hinaus aus der DE-C-2 239 943 bekannt, bei einer Filtereinrichtung insbesondere für Spinnflüsisgkeiten mit zwei austauschbaren Filtereinheiten jeweils am Einlaß und am Auslaß ein Doppelventil vorzusehen, das als Stößel mit zwei einander zugekehrten Ventilsitzen ausgebildet ist, zwischen denen der Stößel verjüngt ist. Im verjüngten Bereich findet der Durchlaß der Spinnflüssigkeit statt. Durch axiale Verschiebung des Stößels wird entweder der eine oder der andere Ventilsitz geschlossen, so daß ein jeweils einem Ventilsitz folgender bzw. vorgeschalteter Abströmkanal bzw. Zuströmkanal abgesperrt wird. Der Stößel weist hierbei den gleichen Durchmesser auf, wie der Ventilsitz. Bei dieser Vorrichtung verbleibt nun Spinnflüssigkeit im jeweils abgesperrten Abströmkanal bzw. Zuströmkanal, wenn das betreffende Filter ausgewechselt wird, so daß sich die Spinnflüssigkeit wegen des Zutritts von Sauerstoff chemisch zersetzen kann. Derart beeinträchtigtes Spinnmaterial verbleibt in dem betreffenden Zuström- bzw. Abströmkanal, es wird mit der Öffnung des betreffenden Ventils herausgeschoben und kann dann ggfs. das neu eingesetzte Filter sofort wieder verschmutzen bzw. gelangt ungefiltert in den der Filtereinrichtung nachgeschalteten Kanal und dann ggfs. zu den Spinndüsen. Um dies zu verhindern, muß der betreffende Zuström- bzw. Abströmkanal vor der Wiederöffnung des betreffenden Ventils gereinigt werden, was mit Schwierigkeiten verbunden ist. Insbesondere kann dabei der Stößel verletzt werden, da sich ja die Reinigung direkt bis zu der dichtenden Wandung des Stößels erstrecken muß Abgesehen davon handelt es sich bei dieser bekannten Filtereinrichtung nicht um eine solche, wie sie beim Gegenstand der Erfindung vorausgesetzt wird, nämlich eine mit einem Ringkanal versehene Vorrichtung. Aus diesem Grunde lassen sich die bei der Filtereinrichtung gemäß der DE-C-2 239 943 herrschenden Verhältnisse nicht mit der erfindungsgemäßen Vorrichtung vergleichen.

Zweckmäßig bildet man den Freiraum zylindrisch aus und legt ihn koaxial zur Stößelachse, wobei sein in Stößelschließlage verbleibender Querschnitt im wesentlichen dem Querschnitt des Ringkanals entspricht. Im Falle der Schließlage bietet dann der Freiraum praktisch den gleichen Strömungswiderstand wie der Ringkanal selbst, so daß die Flüssigkeit insgesamt im Ringkanal ohne Änderung seines Widerstandes strömen kann.

Die Übergänge von der Zylinderwandung des Freiraumes zu seinen Stirnflächen und die Übergänge vom Ringkanal in den Freiraum rundet man vorteilhaft ab, um die Strömung möglichst wirbelfrei verlaufen zu lassen.

Zweckmäßig legt man den Ventilsitz im Ventilgehäuse näher an dessen Stirnfläche als an die Stirnfläche des Freiraumes. In diesem Falle hat der Ventilstößel in Schließlage vor dem Ventilsitz eine nur relativ kurze Strecke bis zur Stirnfläche des Ventilgehäuses dichtend zu überbrücken. Diese Länge ragt dann notwendigerweise in der Öffnungslage des Stößels gegenüber der betreffenden Stirnfläche des Freiraums vor. Je näher also der Ventilsitz im Ventilgehäuse an dessen Stirnfläche liegt, desto kürzer ist dieser überbrückende Bereich des Stößels und desto weniger ragt dieser in der Öffnungslage des Stößels in den Freiraum hinein, was der Gleichmäßigkeit der Strömung im Freiraum in der Öffnungslage des Stößels förderlich ist. Außerdem bleibt hierdurch der Querschnitt des Freiraums im Falle der Öffnungslage des Stößels praktisch unverändert erhalten. Andernfalls müßte die in Hubrichtung gemessene Höhe des Freiraums größer gewählt werden.

Die vorstehend beschriebene Überbrückung des Bereichs zwischen Ventildichtfläche und Stirnfläche des Ventilgehäuses erfolgt zweckmäßig mittels eines zylindrischen Stößelfortsatzes, den der Ventilstößel anschließend an seine Ventildichtfläche aufweist und der in Schließlage bis zur Stirnfläche des Ventilgehäuses reicht. Dieser zylindrische Stößelfortsatz läßt sich ohne weiteres in eine entsprechende Bohrung · im Ventilgehäuse dichtend einpassen.

Um Ventilstößel und Ventilgehäuse mit kleinstmöglichen Toleranzen aufbauen zu können, verwendet man für den Ventilstößel und das ihn umgebende Ventilgehäuse mindestens im Bereich ihrer Oberflächen gehärtetes Material. In diesem Falle wird ein Fressen des Ventilstößels im Ventilgehäuse mit Sicherheit vermieden, außerdem lassen sich hierdurch die erforderlichen Dichtigkeiten erzielen.

Zweckmäßig verwendet man dabei für den Ventilstößel und das Ventilgehäuse das gleiche Material, da sich in diesem Falle infolge Erwärmung gleiche Ausdehnungen ergeben.

Es ist konstruktiv von Vorteil, wenn das Ventilgehäuse als Einsatz in einem Ringkanalgehäuse ausgebildet und das Filter am Ringkanalgehäuse angeschraubt wird, da in diesem Falle sich das Filter dichtend an die Stirnfläche des Einsatzes und dieser mit einer Dichtfläche an eine entsprechende Dichtfläche des Ringkanalgehäuses pressen läßt. Auf diese Weise wird durch Anschrauben des Ventilgehäuses am Ringkanalgehäuse automatisch die Abdichtung zwischen Einsatz und Ringkanalgehäuse herbeigeführt.

Handelt es sich um den Fall des Einsatzes eines Filters, über das eine unter Druck stehende Einrichtung gespeist wird, so ist in bekannter Weise jedem Filter ein Ventil vor- und ein Ventil nachzuschalten. Für das Auswechseln des Filters werden beide Ventile geschlossen. Nach Auswechseln des Filters muß das Filter zunächst beim Einströmen von Flüssigkeit entlüftet werden. Beim Gegenstand der oben erwähnten DE-B-2 049 879 liegt eine wahlweise zu öffnende bzw. zu schließende Entlüftungsöffnung in einem Leitungsbereich nach dem Filter und vor dem Abströmventil. Es existiert damit im Falle der Füllung eines neu eingesetzten Filters ein Bereich vor dem Abströmventil, aus dem unter Umständen Luft schlecht abzuleiten ist.

Bei der erfindungsgemäßen Vorrichtung wird für den vorstehend betrachteten Betriebsfall als Entlüftungsöffnung ein Durchbruch in der Stirnseite des Stößels des Abströmventils vorgesehen, der durch ein gleichartig aufgebautes Hubventil verschließbar ist. In diesem Falle muß die in das Filter einströmende Flüssigkeit bis zum Abströmventil vordringen, um hier die vorher im Filter befindliche Luft herauszudrücken, so daß keine Restluft im Filter verbleiben kann. Durch die Verwendung eines gleichartig aufgebauten Hubventils wird dann erreicht, daß bei geschlossenem Hubventil für die Entlüftungsöffnung der betreffende Ventilstößel mit der Stirnfläche des Ventilstößels des Abströmventils abschließt, so daß sich auch hier keine Ecken ausbilden können, in denen die Flüssigkeitsströmung gestaut werden könnte.

In den Figuren ist ein Ausführungsbeispiel der Erfindung dargestellt. Es zeigt
Fig. 1 den Ringkanal mit Zulauf und zwei Ventilen,
Fig. 2 ein Ventil im Querschnitt zusammen mit einem Filter,
Fig. 3 ein ähnlich aufgebautes Ventil mit einer Entlüftungsöffnung.

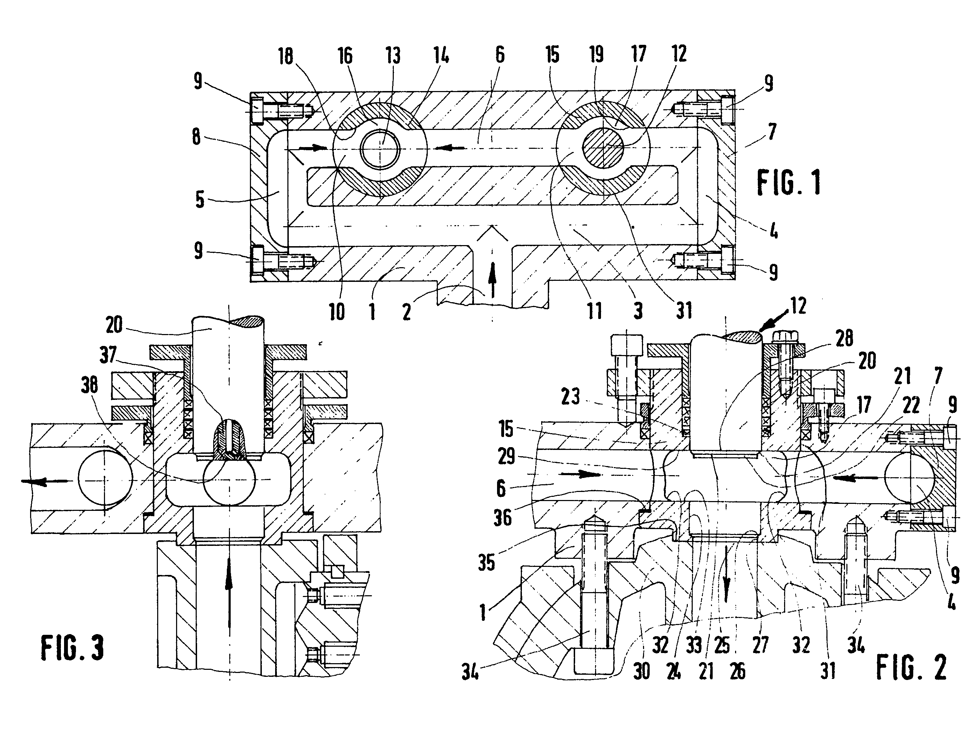

Fig. 1 zeigt ein Ringkanalgehäuse 1, in das der Flüssigkeitszulauf 2 führt, der beispielsweise an den Ausgang einer Schneckenpresse angeschlossen werden kann. Der Zulauf 2 führt in den Zweig 3 des Ringkanals, von dem aus über die Umlenkungen 4 und 5 der andere Zweig 6 des Ringkanals erreicht wird. Die beiden Zweige 3 und 6 und die Umlenkungen 4 und 5 besitzen jeweils kreisrunden Querschnitt. Dabei sind die Umlenkungen 4 und 5 jeweils in ihrem äußeren Bereich durch die Deckel 7 und 8 abgeschlossen, die jeweils über die Schrauben 9 an dem Ringkanalgehäuse 1 befestigt sind. Die Deckel 7 und 8 sind erforderlich, um den Ringkanal im Bereich der Umlenkungen 4 und 5 herstellen zu können. Ferner dienen sie zur Reinigung des Ringkanals, wozu sie von dem Ringkanalgehäuse 1 abgenommen werden.

Im Bereich des Zweiges 6 sind die beiden Hubventile 10 und 11 angeordnet, von denen das Hubventil 11 in Schließlage gezeichnet ist. Sein Ventilschaft 12 ist dementsprechend im Schnitt gezeichnet. Dementsprechend bildet sich von dem Flüssigkeitszulauf 2 ausgehend eine Flüssigkeitsströmung aus, den sich in Zweig 3 nach dessen beiden Seiten aufteilt und über die Umlenkung 5 direkt das Ventil 10 erreicht, während sie über die Umlenkung 4 zunächst den Schaft 12 umspült, um erst dann zu dem Ventil 10 zu strömen. Da das Ventil 10 sich in Öffnungslage befindet, strömt die zugeleitete Flüssigkeit hier aus. Im Falle der Öffnung des Ventils 11 und der Schließung des Ventils 12 ergibt sich entsprechend ein Umströmen des beim Ventil 10 nicht dargestellten Ventilstößels und ein Ausströmen der Flüssigkeit beim Ventil 11. Vom Ventil 10 ist in der Fig. 1 die Öffnung 13 des Ventilsitzes zu sehen.

Gemäß Fig. 1 sind für die beiden Ventile 10 und 11 besondere Ventilgehäuse 14 und 15 vorgesehen, die jeweils als Einsatz in das Ringkanalgehäuse 1 eingesetzt sind. Deren Konstruktion wird näher im Zusammenhang mit der Fig. 2 erläutert.

Wie die Fig. 1 zeigt, besteht um den Ventilstößel 12 und den Ventilsitz herum jeweils ein Freiraum 16 bzw. 17, der, abgesehen von seinen Verbindungsstellen zum Zweig 6 und den Umlenkungen 4 und 5 zylindrisch und koaxial zur Stößelachse liegend ausgebildet ist. An den Übergängen zu den Umlenkungen 4 und 5 und zum Zweig 6 sind Abrundungen 18 bzw. 19 vorgesehen, die für eine wirbelfreie Strömung sorgen.

In der Fig. 2 ist ein geöffnetes Hubventil im Detail dargestellt, das dem Ventil 11 aus Fig. 1 entspricht. Die Fig. 2 zeigt die Umlenkung 4, den Deckel (7) und die Schrauben 9, außerdem einen Teil des Zweiges 6. Der weitere Teil des Zweiges 6 ist abgebrochen. Gemäß den eingezeichneten Pfeilen in dem Zweig 6 und der Umlenkung 4 strömt die Flüssigkeit dem Freiraum 17 zu, über dem der in Öffnungslage gezeichnete Ventilstößel 12, bestehend aus Ventilschaft 20, Ventildichtfläche 21 und Stößelfortsatz 22 dargestellt ist. Der Ventilschaft 20 wird von dem Ventilgehäuse 15 geführt, das gegenüber dem Ventilschaft 20 durch Dichtungen 23 abgedichtet ist.

Auf der dem Ventilschaft 20 gegenüberliegenden Seite des Ventilgehäuses 15 weist dieses eine Bohrung 24 auf, die den gleichen Durchmesser wie der Ventilschaft 20 besitzt. Dicht oberhalb der Stirnseite 25 des Ventilgehäuses 15 verengt sich die Bohrung 24 zum Ventilsitz 26, der mit der Ventildichtfläche 21 des Ventilstößels 12 zusammenpaßt. Im Anschluß an den Ventilsitz 26 befindet sich eine Bohrung 27, deren Durchmesser gleich dem Stößelfortsatz 22 ist. Dies hat zur Folge, daß bei geschlossenem Ventil der Ventilschaft 20 dichtend in die Bohrung 24 und der Stößelfortsatz 22 dichtend in die Bohrung 27 paßt, wobei Ventildichtfläche 21 und Ventilsitz 26 aufeinander aufliegen und die Schließung des Ventils bewirken. Hierdurch wird erreicht, daß im Bereich der betreffenden Wandung des Ventilgehäuses 15 in der Schließlage des Ventils keinerlei Totraum existiert, in dem sich Flüssigkeit stauen könnte.

Wie die Fig. 2 weiter zeigt, schließt die Vorderkante 28 des Ventilschafts 20 in der dargestellten Öffnungslage mit der betreffenden Stirnfläche 29 des Freiraums 17 ab, so daß der Ventilschaft 20 die betreffende Wandung des Ventilgehäuses 15 vollständig durchsetzt, ohne einen Totraum freizulassen, in dem Flüssigkeit gestaut werden könnte. Es ragt aber auch der Ventilschaft 20 mit seiner Vorderkante 28 nicht über die Stirnfläche 29 hervor, da sonst in unnötiger Weise der Strömungswiderstand im Freiraum 17 in der dargestellten Öffnungslage beeinträchtigt werden könnte. Vor der Vorderkante 28 des Ventilschaftes 20 liegt nur die Ventildichtfläche 21 und der Stößelfortsatz 22. Letzterer ist jedoch nur sehr kurz, da sich der Ventilsitz 26 am Ende der Bohrung 24 dicht vor der Stirnseite 25 des Ventilgehäuses befindet. Der Stößelfortsatz 22 weist die gleiche Länge auf wie die Bohrung 27, so daß bei geschlossenem Ventil der Stößelfortsatz 22 mit seiner Stirnfläche gerade mit der Stirnfläche 25 des Ventilgehäuses abschließt. Dies ermöglicht eine einfache Reinigung der Stirnfläche 25 und der Stirnfläche des Stößelfortsatzes 22 im Falle eines abgenommenen Filters 30.

Aus der Fig. 2 geht weiterhin hervor, daß die zylindrische Außenfläche 31 (siehe Draufsicht in Fig. 1) des Freiraums 17 über die Abrundungen 32 in die Stirnflächen 33 und 29 übergeht. Zusammen mit den Abrundungen 18 und 19 liegen damit im gesamten Einmündungsbereich des Zweiges 6 bzw. der Umlenkung 4 in den Freiraum 17 Abrundungen vor, die eine wirbelfreie Einleitung bzw. Ableitung der Flüssigkeit ermöglichen.

Aus den Fig. 1 und 2 geht weiterhin hervor, daß bei geschlossenem Ventil der verbliebene Querschnitt von dem Freiraum 17 im wesentlichen dem Querschnitt des Zweiges 6 bzw. der Umlenkung 4 entspricht, so daß bei geschlossenem Ventil die den Ventilschaft 20 umströmende Flüssigkeit praktisch keinen erhöhten Strömungswiderstand zu überwinden hat. Die Fig. 2 zeigt darüber hinaus, daß der Durchmesser des Zweiges 6 bzw. der Umlenkung 4 gleich der Höhe des Freiraumes 17 ist, so daß beim Einströmen bzw. Ausströmen in bzw. aus dem Freiraum 17 keine Stufe zu überwinden ist.

Gemäß Fig. 2 ist an das Ringkanalgehäuse 1 das Filter 30 angeschraubt, und zwar mittels der Schrauben 34. Mit dem Anschrauben des Filters 30 drückt dieses mit seiner Dichtfläche 35 gegen die Stirnfläche 25 des Ventilgehäuses 15, welche Stirnfläche ebenfalls als Dichtfläche ausgebildet ist, so daß mit dem Anziehen der Schrauben 34 das Filter 30 dichtend an das Ventilgehäuse 15 gepreßt wird. Der Druck der Dichtfläche 35 auf die Stirnfläche 25 überträgt sich auf das Ventilgehäuse 15, das mit einer stufenartig ausgebildeten Dichtfläche 36 gegen eine entsprechende Dichtfläche des Ringkanalgehäuses 1 drückt, so daß gleichzeitig hier die Abdichtung des Ventilgehäuses 15 gegenüber dem Ringkanalgehäuses 1 erfolgt.

Wie weiter oben bereits dargelegt, kann das beschriebene Hubventil im Zusammenhang mit auswechselbaren Filtern verwendet werden, denen einerseits ein solches Hubventil als Zulaufventil vorgeschaltet und ein entsprechendes Hubventil als Ablaufventil nachgeschaltet ist, so daß die Flüssigkeit über das Filter zu einer unter Druck stehenden Einrichtung geleitet werden kann. In diesem Falle sind für die Auswechslung des Filters sowohl das Zulaufventil als auch das Ablaufventil zu schließen. Wie oben bereits dargelegt, ist in einem solchen Falle auf der Seite des Ablaufventils eine Entlüftungsöffnung vorzusehen, die nach Austausch eines Filters und erneuter Flüssigkeitszufuhr zu dem Filter die in dem Filter enthaltene Luft ableitet. Gemäß Fig. 3 ist die Entlüftungsöffnung im Ventilstößel koaxial vorgesehen, und zwar in Form des Hubventils 37, das entsprechend ausgebildet ist, wie das in der Fig. 2 dargestellte Hubventil, so daß sich bei geschlossenem Hubventil 37 eine glatte, durchgehende Stirnfläche 38 des betreffenden Ventilschaftes 20 ergibt. Bei geöffnetem Hubventil 37 ist die Entlüftungsöffnung geöffnet, so daß durch sie die Luft entweichen kann.

**Patentansprüche**

1. Vorrichtung zum Filtern von unter Druck zugeführten Flüssigkeiten hoher Viskosität, insbesondere an eine Strangpresse anschließbare Vorrichtung zum Filtern von Schmelzen aus thermoplastischen Kunststoffen, mit mindestens zwei auswechselbaren Filtern (30), die an der Stirnfläche (25) eines Ventilgehäuses (14 bzw. 15) dichtend angebracht sind und denen die Flüssigkeit über einen Ringkanal (3,4, 5, 6) derart zugeführt wird, daß die Ventilstößel (12) von an Abzweigungen vom Ringkanal liegenden Hubventilen auch im Falle von deren Schließlage aufgrund eines die Ventilstößel umgebenden Freiraumes (16 bzw. 17) von der Flüssigkeit umspült bleiben, dadurch gekennzeichnet, daß der Schaftdurchmesser jedes Ventilstößels (12) gleich dem größten Durchmesser des Ventilsitzes (26) ist und die Schaftführung (23) den Schaft (20) dichtend umschließend, bis an den gegenüber dem Ventilsitz (26) erweiterten Freiraum (16 bzw. 17) heranreicht, dessen in Hubrichtung gemessene Höhe im wesentlichen gleich dem Durchmesser des Ringkanals (3, 4, 5, 6) ist, wobei der Schaft (20) in Öffnungslage des betreffenden Ventils mit seiner Vorderkante (28) etwa mit der betreffenden Oberfläche (29) des Freiraums (16 bzw. 17) abschließt, und daß der Ventilstößel (12) in Schließlage die Wandung des Ventilgehäuses (14 bzw. 15) dichtend bis zur Stirnfläche (25) des Ventilgehäuses (14 bzw. 15) durchsetzt.

2. Vorrichtung nach Anspruch 1, dadurch gekennzeichnet, daß der Freiraum (16 bzw. 17) zylindrisch ausgebildet ist und koaxial zur Stößelachse liegt, wobei sein in Stößelschließlage verbleibender Querschnitt im wesentlichen dem Querschnitt des Ringkanals (3, 4, 5, 6) entspricht.

3. Vorrichtung nach Anspruch 2, dadurch gekennzeichnet, daß die Übergänge (32) von der Zylinderwandung des Freiraums (16 bzw. 17) zu seinen Stirnflächen (29, 33) abgerundet sind.

4. Vorrichtung nach Anspruch 2 oder 3, dadurch gekennzeichnet, daß die Übergänge (18, 19) vom Ringkanal (3, 4, 5, 6) in den Freiraum (16 bzw. 17) abgerundet sind.

5. Vorrichtung nach einem der Ansprüche 1—4, dadurch gekennzeichnet, daß der Ventilsitz (26) im Ventilgehäuse (15) näher an dessen Stirnfläche (25) als an der Stirnfläche (33) des Freiraums (16 bzw. 17) liegt.

6. Vorrichtung nach einem der Ansprüche 1—5, dadurch gekennzeichnet, daß der Ventilstößel (12) anschließend an seine Ventildichtfläche (21) einen zylindrischen Stößelfortsatz (22) aufweist, der in Schließlage bis zur Stirnfläche (25) des Ventilgehäuses reicht.

7. Vorrichtung nach einem der Ansprüche 1—6, dadurch gekennzeichnet, daß der Ventilstößel (12) und das ihn umgebende Ventilgehäuse (14 bzw. 15) mindestens im Bereich ihrer Oberflächen aus gehärtetem Material bestehen.

8. Vorrichtung nach einem der Ansprüche 1—7, dadurch gekennzeichnet, daß das Ventilgehäuse (14 bzw. 15) als Einsatz in einem Ringkanalgehäuse (1) ausgebildet und das Filter (30) am Ringkanalgehäuse (1) angeschraubt ist, wobei das Filter (30) dichtend an die Stirnseite (25) des Ventilgehäuse-Einsatzes und dieser mit einer Dichtfläche (36) an eine entsprechende Dichtfläche des Ringkanalgehäuses (1) gepreßt wird.

9. Vorrichtung nach einem der Ansprüche 1—8, dadurch gekennzeichnet, daß für den Fall der Nachschaltung eines Ventils nach dem Filter (30) als Entlüftungsöffnung ein Durchbruch in der Stirnseite (38) des Stößels (12) des Abströmventils vorgesehen ist, der durch ein gleichartig aufgebautes Hubventil (37) verschließbar ist.

**Claims**

1. Apparatus for filtering high-viscosity liquids which are supplied under pressure, in particular an apparatus which can be connected to an extrusion press, for filtering thermoplastic materials in a molten condition, comprising at least two replaceable filters (30) which are sealingly mounted to the end face (25) of a valve housing (14 or 15 respectively) and to which the liquid is supplied by way of an annular duct (3, 4, 5, 6) in such a way that the valve stems (12) of lift valves which are disposed at branch points of the annular duct still have the liquid flowing around them even when in their closed position, by virtue of a free space (16 or 17 respectively) surrounding the valve stems, characterised in that the shank diameter of each valve stem (12) is equal to the largest diameter of the valve seat (26) and the shank guide means (23), which sealingly embraces the shank (20), extends as far as the free space (16 or 17) which is enlarged relative to the valve seat (26), the height of said free space, as measured in the lift direction, being substantially equal to the diameter of the annular duct (3, 4, 5, 6), wherein the shank (20), in the open position of the respective valve, terminates with its front edge (28) approximately at the respective surface (29) of the free space (16 or 17), and that in the closed position the valve stem (12) passes sealingly through the wall of the valve housing (14 or 15) to the end face (25) of the valve housing (14 or 15).

2. Apparatus according to claim 1 characterised in that the free space (16 or 17) is cylindrical and is disposed coaxially with respect to the axis of the stem, wherein its cross-section which remains in the closed position of the valve stem substantially corresponds to the cross-section of the annular duct (3, 4, 5, 6).

3. Apparatus according to claim 2 characterised in that the transitions (32) from the cylindrical wall of the free space (16 or 17) to its end surfaces (29, 33) are rounded.

4. Apparatus according to claim 2 or claim 3 characterised in that the transitions (18, 19) from the annular duct (3, 4, 5, 6) into the free space (16 or 17) are rounded.

5. Apparatus according to one of claims 1 to 4 characterised in that the valve seat (26) in the valve housing (15) is closer to the end face (25) thereof than to the surface (33) of the free space (16 or 17).

6. Apparatus according to one of claims 1 to 5 characterised in that, adjoining its valve sealing surface (21), the valve stem (12) has a cylindrical stem extension portion (22) which in the closed position extends to the end face (25) of the valve housing.

7. Apparatus according to one of claims 1 to 6 characterised in that the valve stem (12) and the valve housing (14 or 15) surrounding same comprise hardened material at least in the region of the surfaces thereof.

8. Apparatus according to one of claims 1 to 7 characterised in that the valve housing (14 or 15) is in the form of an insert in an annular duct housing (1) and the filter (30) is screwed to the annular duct housing (1), wherein the filter (30) is sealingly pressed against the end face (25) of the valve housing insert and same is pressed with a sealing surface (36) against a corresponding sealing surface of the annular duct housing (1).

9. Apparatus according to one of claims 1 to 8 characterised in that, for the situation of disposing a valve downstream of the filter (30), an aperture acting as a vent opening is provided in the end (38) of the stem (12) of the discharge valve, which can be closed by a lift valve (37) of similar construction.

**Revendications**

1. Dispositif pour filtrer des fluides de forte viscosité amenés sous pression, en particulier dispositif de filtrage de matières synthétiques thermoplastiques fondues, pouvant être rac cordé à une extrudeuse, comportant au moins deux filtres amovibles (30), disposés hermétiquement sur la surface frontale (25) d'une cage de soupape (14), (15), le fluide étant amené vers lesdits filtres par un canal annulaire de distribution (3 à 6) de sorte que le fluide puisse fluer autour des corps (12) de soupapes à effacement, grâce à un espace libre (16), (17) ménagé autour desdits corps de soupape prévus à des déviations du canal annulaire de distribution, même lorsque lesdites soupapes sont fermées, caractérisé en ce que le diamètre de la tige (20) du corps de soupape (12) est égal au plus grand diamètre du siège de soupape (26), en ce que le guide de soupape (23) entourant le corps de soupape de façon étanche s'étend jusqu'à l'espace libre (16), (17) qui est de plus grand diamètre que le siège de soupape et dont la hauteur en direction de l'effacement correspond sensiblement au diamètre du canal annulaire de distribution, l'arête avant (28) de la tige de soupape (20) venant en position ouverte de la soupape approximativement au contact de la surface supérieure (29) délimitant l'espace libre en vue d'obturer ce dernier et en ce que le corps de soupape en position fermée traverse de façon étanche la paroi de la cage de soupape (14), (15) jusqu'à la surface frontale (25) de ladite cage.

2. Dispositif selon la revendication 1 caractérisé par la forme cylindrique de l'espace libre (16), (17) coaxial à l'axe du corps de soupape, dont la section transversale correspond sensiblement à la section transversale du canal annulaire de distribution lorsque le corps de soupape est en position fermée.

3. Dispositif selon la revendication 2 caractérisé par une jonction arrondie (32) entre les parois cylindriques et les surfaces frontales (29), (33) délimitant l'espace libre (16), (17).

4. Dispositif selon l'une des revendications 2 et 3 caractérisé par une jonction arrondie (18), (19) du canal annulaire de distribution et des parois délimitant l'espace libre.

5. Dispositif selon l'une des revendications 1 à 4 caractérisé en ce que le siège de soupape (26) à l'intérieur de la cage de soupape se trouve plus proche de la surface frontale (25) de ladite cage que de la surface frontale (33) délimitant l'espace libre.

6. Dispositif selon l'une des revendications 1 à 5 caractérisé en ce que le corps de soupape présente au delà de sa surface d'étanchéité (21) un prolongement cylindrique (22) qui atteint en position fermée la surface frontale (25) de la cage de soupage.

7. Dispositif selon l'une des revendications 1 à 6 caractérisé en ce que le corps de soupape et la cage de soupape qui l'entoure sont, au moins dans la zone de leurs surfaces, en matériau durci.

8. Dispositif selon l'une des revendications 1 à 7 caractérisé en ce que la cage de soupape est monté comme insert dans le boîtier (1) du canal annulaire de distribution, sur lequel est vissé le filtre (30), ce dernier étant serré hermétiquement contre la surface frontale (25) de l'insert constituant la cage de soupape, qui est lui-même par sa surface d'étanchéité (36) contre la surface d'étanchéité correspondante du boîtier du canal annulaire de distribution.

9. Dispositif selon l'une des revendications 1 à 8 caractérisé par une ouverture prévue dans l'hypothèse de l'insertion d'une soupape après le filtre, dans la surface frontale (38) du corps de la soupape d'écoulement, servant d'ouverture d'aération, obturable par une soupape à effacement (37) de construction similaire.

FIG. 1

FIG. 3

FIG. 2

0 048 973